# EUROPEAN PATENT APPLICATION

(11) **EP 2 068 508 A1**
(43) Date of publication of application: **10.06.2009**
(21) Application number: 07816925.7
(22) Date of filing: 20.09.2007
(51) Int. Cl.: H04L 12/56

(54) **METHOD, DEVICE AND SYSTEM FOR SYNCHRONIZING USER DATA IN NEXT GENERATION NETWORK**

(30) Priority: 30.09.2006 CN 200610159672
(71) Applicant: Huawei Technologies Co., Ltd., Shenzhen, Guangdong Province 518129 (CN)
(72) Inventor: HUANG, Fuqing, Guangdong 518129 (CN)
(74) Representative: Gulde Hengelhaupt Ziebig & Schneider
(86) International application number: PCT/CN2007/070734
(87) International publication number: WO 2008/049355

(57) **Abstract**

A method for synchronizing user data in the next generation network is disclosed according to one embodiment of the present invention. An Access Resource and Admission Control Function entity (A-RACF) sends a user data synchronization request to a Connectivity Session Location and Repository Function (CLF). After the CLF receives the user data synchronization request, the CLF sends the user data of each user to the A-RACF, such that the user data of the A-RACF and the CLF may keep synchronized. A system and apparatuses for synchronizing user data in a next generation network are also disclosed according to embodiments of the present invention. Since the A-RACF can synchronize the user data with the CLF, there is no need to acquire user data using an information flow for acquiring the user data during user session establishment. Accordingly, the delay in establishing user session is reduced effectively and the user experience is thereby enhanced. In addition, the A-RACF may also audit the user data with an information flow for synchronizing the user data such that the invalid user data can be removed and the reliability of the A-RACF is improved.

## Description

### FIELD OF THE INVENTION

The present invention relates to Next Generation Network (NGN), more specifically, to methods, apparatuses and systems for synchronizing user data in NGN.

### BACKGROUND

With the birth of internet, a distribution method called Best-Effort has been utilized, but Quality of Service (QoS) is not guaranteed. In the "Best-Effort" service mode, requests from all the services are handled in queue with the same priority. A specific demanding service may not be guaranteed with a better QoS.

Therefore, Internet Engineering Task Force (IETF) has proposed several IP service quality techniques such as Differentiated Service (DiffServ) and Integrated Service (IntServ). The DiffServ provides different types of services for different classes of traffic, while the IntServ gurantees a strict point-to-point QoS for the Internet. The IntServ is a flow-based QoS mechanism. It controls strictly the resources and provides a strict QoS guarantee. However, the IntServ faces with an extensibility problem. Since each router that a service flow passes through needs to maintain itself at a soft state, the IntServ can not be deployed on a large scale. DiffServ is a class-based QoS mechanism. The deployment of the DiffServ is quite successful; however, it only provides a relative QoS guarantee, and the QoS may still not be guaranteed especially in the case of an insufficient bandwidth.

In year 2002, IETF proposes a DS-Aware MPLS TE model. The model combines the merits of DiffServ and MPLS-TE, optimizes transmission recourses and further improves the performance and efficiency of the network. However, this model encounters an N-square problem. Moreover, it has difficulty in interoperability among different domains.

A currently accepted viewpoint in the industry is that no matter a broad bandwidth or DiffServ, the point-to-point QoS issue can not be solved thoroughly. In recent years, a session-based dynamic QoS control mechanism has become a research subject. This mechanism implements session-based Connection Admission Control (CAC), resource reservation, and dynamic policy distribution in a control plane, and implements service-aware and policy execution in a data plane. Such mechanism not only provides a strict QoS assurance, but also enjoys a sound interoperability. Currently, many standardization organizations are researching on similar mechanisms. The research accomplished by the Telecommunications and Internet converged Services and Protocols for Advanced Networking (TISPAN) is recognized widely.

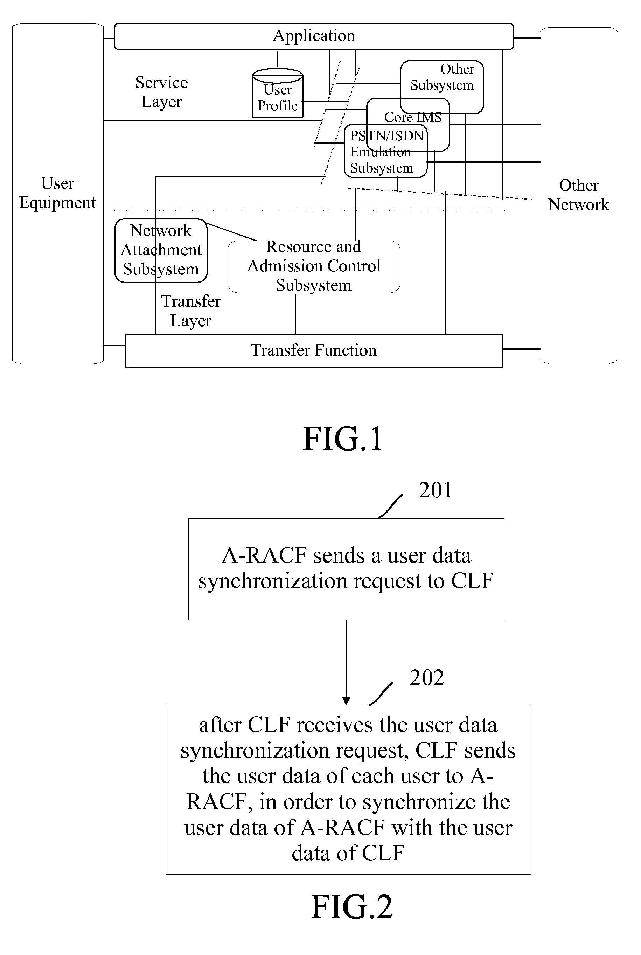

Figure 1 is NGN architecture developed by TISPAN in the conventional art. The architecture braces a subsystem-oriented design concept. It can be adapted to new demands and services as time varies. Moreover, it facilitates the introduction of subsystem from other standardization organization. In addition, the framework in the subsystem can be adjusted flexibly and has no impact on the other subsystem. Also, each subsystem is a set of function entities and interfaces. In a specific implementation, some function entities can be combined together in accordance with the business model, the provided service and capability. Consequently, the interfaces between these entities become internal interfaces.

As illustrated in Figure 1, this functional architecture can be divided into a service layer and an IP based transfer layer. The service layer includes the following elements: a core IP Multimedia Subsystem (IMS), a PSTN/ISDN Emulation Subsystem (PES), other multi-media subsystem (e.g., streaming media subsystem, content broadcasting subsystem) and applications. In addition, the service layer further includes some public components, such as, accounting function, user data management, security management, routing database, etc. The transfer layer provides IP interconnection for the user equipment. The transfer layer includes two control subsystems: a network attachment subsystem (NASS) and a resource and admission control subsystem (RACS).

The NASS primarily implements the following functions.

(1) dynamic provision of IP addresses and other configuration parameters for user equipments; (2) user authentication before allocating the IP address or during the allocating process; (3) network access authorization; (4) user location management; (5) CPE configuration.

The RACS primarily provides admission control and gate control functions. The admission control involves checks and authorization based on operator's policy rule, resource availability, and user subscription information. A Connectivity Session Location and Repository Function (CLF) in the NASS subsystem may provide the RACS subsystem with user data such as user location information and user subscription information.

An E4 reference point is defined between an Access Resource and Admission Control Function entity (A-RACF) in the RACS subsystem and the CLF function entity in the NASS subsystem. With the E4 reference point, A-RACF may acquire location information (e.g., physical node address to reach the user) from the CLF to determine available network resources for use. The A-RACF may also acquire a user network profile for reference when handling the request for resource allocation. The information exchanged at E4 reference point primarily includes a Subscribed user ID, a user physical access ID, a user logical access ID, a user access network type, a user globally unique IP address, user initial gate settings, user subscription data, a user QoS profile, a user-based accounting rule, user-based policy information.

Three types of information flows between CLF and A-RACF are defined: 1) information flow for reporting user data. This information flow is used by the CLF to report actively the user data to the A-RACF. This information flow is generated after an IP address is allocated to the user or when the user subscription data reported to the A-RACF is modified. 2) information flow for acquiring user data. This information flow is used by the A-RACF to request a specific user data from the CLF. The response to the information flow for acquiring user data is the information flow for reporting the user data. The A-RACF needs to provide the CLF with a globally unique IP address of a user or user ID. The CLF may report correct user data based on these information. 3) information flow for indicating IP connectivity release. This information flow is used by CLF to report a loss of IP connectivity to the RACS. As such, the RACS may delete the corresponding user data. This information flow is generated when the allocated IP address is being released or a layer two resource is released.

However, the existing information flows between the CLF and the A-RACF are not able to tackle the issue of loss of reported user data caused by an A-RACF internal fault. When the A-RACF internal fault causes the interruption of protocol connection between the CLF and the A-RACF, the CLF may re-report the user data with the information flow for reporting the user data when the protocol between the CLF and the A-RACF is being reconnected. However, if such A-RACF internal fault does not cause the interruption of protocol connection between the CLF and the A-RACF, the CLF may not be able to detect the RACS internal fault. Accordingly, the CLF may not re-report the user data, and thus the A-RACF may not be able to synchronize the user data with the CLF. As such, if the A-RACF does not find any user data when performing resource and admission control upon the user session, the information flow for acquiring user data is needed to request user data from CLF. However, the information flow for acquiring user data may prolong the delay in establishing the user session, thereby influencing the user experience.

### SUMMARY

A method for synchronizing user data in a next generation network (NGN) is provided according to one embodiment of the present invention so that user data of an A-RACF and a CLF may keep synchronized.

A system for synchronizing user data in a next generation network (NGN) is provided according to one embodiment of the present invention so that user data of the A-RACF and the CLF may keep synchronized.

An A-RACF and a CLF are also provided according to embodiments of the present invention so that the user data of the A-RACF and the CLF may keep synchronized.

The technical solutions according to the embodiments of the present invention are presented as follows.

A method for synchronizing user data in a next generation network includes:
sending, by an Access Resource and Admission Control Function entity (A-RACF), a user data synchronization request to a Connectivity Session Location and Repository Function entity (CLF); and
sending, by the CLF, user data to the A-RACF after receiving the user data synchronization request, so that the user data of the A-RACF and the CLF can keep synchronized.

A system for synchronizing user data in a next generation network includes an A-RACF entity and a CLF entity.

The A-RACF entity is configured to send a user data synchronization request to the CLF entity.

The CLF entity is configured to send user data of each user to the A-RACF after receiving the user data synchronization request, so that the user data of the A-RACF entity and the CLF entity can keep synchronized.

An A-RACF includes a user data synchronization request transmitting unit and a user data receiving unit.

The user data synchronization request transmitting unit is configured to generate a user data synchronization request and send the user data synchronization request to the CLF.

The user data receiving unit is configured to receive the user data from the CLF in response to the user data synchronization request.

A CLF includes a user data synchronization request receiving unit and a user data transmitting unit.

The user data synchronization request receiving unit is configured to receive a user data synchronization request from an A-RACF.

The user data transmitting unit is configured to return the user data to the A-RACF in response to the user data synchronization request.

As can be seen from the foregoing technical solutions, according to the present invention, the A-RACF initially sends a user data synchronization request to the CLF. After the CLF receives the user data synchronization request, the CLF synchronizes the user data of each user with the A-RACF. Accordingly, with the present invention, the A-RACF may instruct the CLF to synchronize user data with the A-RACF. As a result, the user data of A-RACF and CLF can keep synchronized.

### BRIEF DESCRIPTION OF THE DRAWING(S)

Figure 1 is an NGN architecture developed by TISPAN in the conventional art;

Figure 2 is a flowchart of a method for synchronizing user data in the NGN according to one embodiment of the present invention;

Figure 3 is an exemplary flowchart of a method for synchronizing user data in the NGN according to one embodiment of the present invention;

Figure 4 is an exemplary diagram of a system for synchronizing user data in the NGN according to one embodiment of the present invention;

Figure 5 is an exemplary diagram of an A-RACF according to one embodiment of the present invention; and

Figure 6 is an exemplary diagram of a CLF according to one embodiment of the present invention.

### DETAILED DESCRIPTION

The purposes, technical solutions and advantages concerning the embodiments of the present invention will become more readily appreciated by reference to the following description of the embodiments, when taken in conjunction with the accompanying drawings.

In one embodiment, a new information flow between the A-RACF and the CLF, i.e., an information flow for synchronizing user data is proposed. With this information flow, the issue that, for instance, the CLF is not able to detect the loss of reported user data due to an A-RACF internal fault can be solved.

Figure 2 is an exemplary flowchart of a method for synchronizing user data in the NGN according to one embodiment of the present invention. As illustrated in Figure 2, the method includes the following steps.

Step 201: The A-RACF sends a user data synchronization request to the CLF.

Here, after the A-RACF detects that the A-RACF needs to synchronize user data with the CLF, the A-RACF sends to the CLF a user data synchronization request message.

In one exemplary embodiment, information elements involved in the user data synchronization request message are depicted below.

**Table ONE**

| Name of Information Element | Corresponding AVP | Carrying State | Description |
|---|---|---|---|
| RACS-Id | AF-Application-Identifier | Must Be Carried | identifies the A-RACF function entity which requests the user data |

The user data synchronization request message has to carry an AF-Application-Identifier AVP, and sets the AVP value as an identifier of the A-RACF function entity which requests the user data.

The command code of the user data synchronization request message may be allocated by IANA. Moreover, the format of a Diameter message of the user data synchronization request message is defined as follows.

| | |
|---|---|
| <user data synchronization request message>::= | < Diameter Header: REQ, PXY> |
| | < Session-Id > |
| | { Vendor-Specific-Application-Id } |
| | { Auth-Session-State } |
| | { Origin-Host } |
| | { Origin-Realm } |
| | [Destination-Host] |
| | { Destination-Realm } |
| | [AF-Application-Identifier] |
| | *[ AVP ] |
| | *[ Proxy-Info ] |
| | *[ Route-Record ] |

where <Diameter Header: REQ, PXY> represents the header of the Diameter message which may carry a request symbol and a proxy symbol. < Session-Id > represents a session ID. { Vendor-Specific-Application-Id } represents a vendor-specific application ID. { Auth-Session-State } represents an authorization session state. { Origin-Host } represents the name of the origin host. { Origin-Realm } represents the name of origin realm. [ Destination-Host ] represents the name of destination host. { Destination-Realm } represents the name of destination realm. [AF-Application-Identifier] represents an application function ID. *[AVP] represents other AVP.
*[Proxy-Info] represents proxy information. *[Route-Record] represents routing record.

Step 202: After the CLF receives the user data synchronization request, the CLF synchronizes the user data for each user.

Here, after the CLF receives the user data synchronization request, the CLF may determine the validity of the A-RACF according to the A-RACF ID carried in the user data synchronization request. If the A-RACF is valid, the CLF sends the user data of each user to an A-RACF related to A-RACF ID. As such, the user data of the A-RACF related to the A-RACF ID and the user data of the CLF can keep synchronized. If the A-RACF is invalid, synchronization will not be performed.

In addition, after the CLF synchronizes the user data of each user with the A-RACF, the CLF may send a notification indicative of the termination of the user data synchronization to the A-RACF. Preferably, after the A-RACF receives the notification indicative of the termination of the user data synchronization, the A-RACF returns a response to the notification indicative of the termination of the user data synchronization to the CLF.

Alternatively, after the CLF receives the user data synchronization request, the CLF may further determine if user data needs to be synchronized with the A-RACF in accordance with the local policy rule. If the local policy rule allows for synchronizing user data with the A-RACF, the CLF sends user data of each user to the A-RACF and sends to the A-RACF a user data synchronization response which carries information indicative of approving synchronization. If the local policy rule does not allow for synchronizing user data with the A-RACF, the CLF sends a user data synchronization response which carries information indicative of denying synchronization and does not send the user data of each user to the A-RACF. Preferably, after the CLF receives the user data synchronization request, and after the CLF determines to synchronize the user data with the A-RACF based on the local policy rule, the CLF may further figure out a list of users to be synchronized with the A-RACF based on the local policy rule and/or user privacy information and sends the user data of the user in the list to the A-RACF. As such, the user data of the user in the user list regarding the A-RACF entity and the CLF entity may keep synchronized.

In addition, after the CLF receives the user data synchronization request, the CLF preferably determines if the user data is being updated. If the user data is being updated, the CLF the user data waits for the completion of the user data update and sends the updated user data of each user to the A-RACF; otherwise, the CLF sends the user data of each user to the A-RACF.

In one embodiment of the present invention, the user data may includes One or more of any combination of a subscribed user ID, a user physical access ID, a user logical access ID, a user access network type, a user globally unique IP address, user initial gate settings, user subscription data, a user QoS profile, a user-based accounting rule, user-based policy information.

As an example, the command code of user data synchronization response message may be the same as that of the user data synchronization request message. The message format of the user data synchronization response message can be defined as follows.

| | |
|---|---|
| <user data synchronization response message>::= | < Diameter Header: PXY> |
| | < Session-Id > |
| | { Vendor-Specific-Application-Id } |
| | [Result-Code ] |
| | [Experimental-Result ] |
| | { Auth-Session-State } |
| | { Origin-Host } |
| | { Origin-Realm } |
| | *[ AVP ] |
| | *[Failed-AVP ] |
| | *[Proxy-Info] |
| | *[ Route-Record] |

where <Diameter Header: PXY> represent the header of the Diameter message which may carry a proxy symbol. < Session-Id > represents a session ID. { Vendor-Specific-Application-Id } represents a vendor-specific application ID. [Result-Code] represents a result code. [Experimental-Result ] represents experimental result. { Auth-Session-State } represents an authorization session state. { Origin-Host } represents the name of the origin host. { Origin-Realm } represents the name of origin realm. *[ AVP] represents other AVP. *[ Failed-AVP] represents fail information.
*[Proxy-Info] represents proxy information. *[ Route-Record ] represents routing record.

Specifically, the CLF may execute the decision of whether to synchronize user data with the A-RACF based on the local policy rule. If the CLF decides to synchronize user data with the A-RACF, the CLF may set the value of Result-Code AVP to DIAMETER_SUCCESS in the user data synchronization response message sent to the A-RACF. If the CLF decides not to synchronize user data with the A-RACF, the CLF may sets the value of Result-Code AVP to a value other than DIAMETER_SUCCESS in the user data synchronization response message sent to the A-RACF. For instance, the value of Result-Code AVP can be set to DIAMETER_UNABLE_TO_COMPLY, indicating a refusal to synchronize user data with A-RACF.

In addition, after the A-RACF receives the user data synchronization response message from the CLF, it may make a synchronization mark on the user data reported by the CLF stored in the A-RACF so as to indicate that the user data needs to be synchronized.

After the CLF admits the user data synchronization request from the A-RACF and sends to the A-RACF the A-RACF user data synchronization response message (the value of Result-Code AVP is set to DIAMETER_SUCCESS), the CLF starts to synchronize the user data with the A-RACF. Specifically, the CLF may check if the user data stored in the CLF can be reported to the A-RACF for the purpose of synchronization, based on the local policy rule and/or user privacy information. For the user data which can be reported to the A-RACF for the purpose of synchronization, the CLF may further check if the user data is currently being updated. If the user data is being updated, the CLF may postpone the report of user data until the user data is updated. Then, the CLF may report the updated user data to the A-RACF.

Each interaction of user data report to A-RACF by the CLF may includes a user data report message sent from the CLF to the A-RACF and a response message to user data report. One user data synchronization process may require several interactions of user data report.

As an example, information elements involved in the user data report message may be depicted in Table TWO.

**Table TWO**

| Name of Information Element | Corresponding AVP | Carrying State | Description |
|---|---|---|---|
| Globally unique IP Address | Globally-Unique-Address | Carried Conditionally | this information element includes an IP address of a user equipment used by the subscriber. Corresponding address domain of the IP address |
| Logical Access ID | Logical-Access-Id | Must Be Carried | ID of logical access connected by the user equipment |
| Access Network Type | Access-Network-Type | Carried Optionally | Type of access network providing IP connectivity for the user equipment |
| Subscriber ID | User-Name | Carried Conditionally | ID of a user attached to the network |
| Physical Access ID | Physical-Access-Id | Carried Optionally | ID of physical access connected by the user equipment |
| Initial Gate Settings | Initial-Gate-Settings | Carried Optionally | Initial gate settings |
| QoS Profile | QoS-Profile | Carried Optionally | User's QoS profile |

The user data report message may use the existing message. The message format can be illustrated as follow.

| | |
|---|---|
| <user data report message>::= | < Diameter Header: 309, REQ, PXY> |
| | < Session-Id > |
| | { Vendor-Specific-Application-Id } |
| | { Auth-Session-State } |
| | { Origin-Host } |
| | { Origin-Realm } |
| | { Destination-Host } |
| | { Destination-Realm } |
| | [Globally-Unique-IPAddress] |
| | [User-Name] |
| | [Logical-Access-Id] |
| | [Physical-Access-Id] |
| | [Access-Network-Type] |
| | [Initial-Gate-Setting] |
| | *[QoS-Profile] |
| | [IP-Connectivity-Status] |
| | *[ AVP ] |
| | *[ Proxy-Info ] |
| | *[ Route-Record ] |

where <Diameter Header: 309, REQ, PXY> represents the header of the Diameter message whose command code is 309 and which carries request symbol and proxy symbol. < Session-Id > represents a session ID. { Vendor-Specific-Application-Id } represents a vendor-specific application ID. { Auth-Session-State } represents an authorization session state. { Origin-Host } represents the name of the origin host. { Origin-Realm } represents the name of origin realm. [Destination-Host] represents the name of destination host. { Destination-Realm } represents the name of destination realm. [Globally-Unique-IPAddress] represents the globally unique IP address. [User-Name] represents a user name. [Logical-Access-Id] represents a logical access ID. [Physical-Access-Id] represents a physical access ID. [Access-Network-Type] represents the type of access network. [Initial-Gate-Setting] represents an initial gate settings. *[QoS-Profile] represents QoS profile. [IP-Connectivity-Status] represents the IP connectivity status. *[AVP] represents other AVP. *[Proxy-Info] represents proxy information. *[Route-Record] represents routing record.

After the A-RACF receives each user data report message from the CLF, the A-RACF may send a response message to the user data report. The response message to the user data report may also use the existing message. The message format can be illustrated as follow.

| | |
|---|---|
| <response message to the user data report>::= | <Diameter Header: 309, PXY> |
| | < Session-Id > |
| | { Vendor-Specific-Application-Id } |
| | [Result-Code] |
| | [Experimental-Result ] |
| | { Auth-Session- State } |
| | { Origin-Host } |
| | { Origin-Realm } |
| | *[ AVP ] |
| | * [ Failed-AVP ] |
| | * [ Proxy-Info ] |
| | * [ Route-Record ] |

where <Diameter Header: 309, PXY> represents the header of the Diameter message whose command code is 309 and which may carry a proxy symbol. < Session-Id > represents a session ID. { Vendor-Specific-Application-Id } represents a vendor-specific application ID. [Result-Code] represents a result code. [Experimental-Result ] represents experimental result. { Auth-Session-State } represents an authorization session state. { Origin-Host } represents the name of the origin host. { Origin-Realm } represents the name of origin realm. *[AVP] represents other AVP. *[ Failed-AVP ] represents fail information. *[ Proxy-Info] represents proxy information. *[ Route-Record ] represents routing record.

If the A-RACF already has the reported user data, the stored user data is updated.
If the original user data bears a synchronization mark, the synchronization mark is removed. If the A-RACF does not have the reported user data, the reported user data is stored.

Further, after the CLF has synchronized all the user data which need to be synchronized with the A-RACF, the CLF may inform the A-RACF of the termination of the user data synchronization. Specifically, after the CLF has synchronized all the user data which need to be synchronized with the A-RACF, the CLF may send to the A-RACF a notification message indicative of the termination of the user data synchronization.

The command code of the notification message indicative of the termination of the user data synchronization may be allocated by IANA in unity. Moreover, the message format of the notification message indicative of the termination of the user data synchronization is defined as follows.

| | |
|---|---|
| <the notification message indicative of the termination of the user data synchronization>::= | < Diameter Header: REQ, PXY> |
| | < Session-Id > |
| | { Vendor-Specific-Application-Id } |
| | { Auth-Session-State } |
| | { Origin-Host } |
| | { Origin-Realm } |
| | { Destination-Host } |
| | { Destination-Realm } |
| | *[ AVP ] |
| | *[ Proxy-Info ] |
| | *[ Route-Record ] |

where <Diameter Header: REQ, PXY> represents the header of the Diameter message which may carry a request symbol and a proxy symbol. < Session-Id > represents a session ID. { Vendor-Specific-Application-Id } represents a vendor-specific application ID. { Auth-Session-State } represents an authorization session state. { Origin-Host } represents the name of the origin host. { Origin-Realm } represents the name of origin realm. [ Destination-Host ] represents the name of destination host. { Destination-Realm } represents the name of destination realm. *[ AVP ] represents other AVP. *[ Proxy-Info ] represents proxy information. *[ Route-Record ] represents routing record.

In addition, after the A-RACF receives from CLF the notification message indicative of the termination of the user data synchronization, a response to the notification message indicative of the termination of the user data synchronization may be returned to the A-RACF.

The command code of the response to the notification message indicative of the termination of the user data synchronization may be the same as that of user data synchronization request message. The message format of this message can be defined as follows.

| | |
|---|---|
| <response to the notification message indicative of the termination of the user data synchronization>::= | < Diameter Header: PXY> |
| | < Session-Id > |
| | { Vendor-Specific-Application-Id } |
| | [ Result-Code ] |
| | [ Experimental-Result ] |
| | { Auth-Session-State } |
| | { Origin-Host } |
| | { Origin-Realm } |
| | *[ AVP ] |
| | *[ Failed-AVP ] |
| | [Proxy-Info ] |
| | *[ Route-Record ] |

where <Diameter Header: PXY> represent the header of the Diameter message which may carry a proxy symbol. < Session-Id > represents a session ID. { Vendor-Specific-Application-Id } represents a vendor-specific application ID. [ Result-Code ] represents a result code. [ Experimental-Result ] represents experimental result. { Auth-Session-State } represents an authorization session state. { Origin-Host } represents the name of the origin host. { Origin-Realm } represents the name of origin realm. *[ AVP ] represents other AVP. *[ Failed-AVP ] represents fail information. *[ Proxy-Info ] represents proxy information. *[ Route-Record ] represents routing record.

Preferably, the A-RACF checks the user data reported by the CLF before the synchronization. With respect to the user data which still bears a synchronization mark (which means that the user data was not re-reported during the synchronization process, otherwise the synchronization mark should be removed already), the A-RACF may treat these user data as no longer valid. The A-RACF may delete these user data and release the affected session.

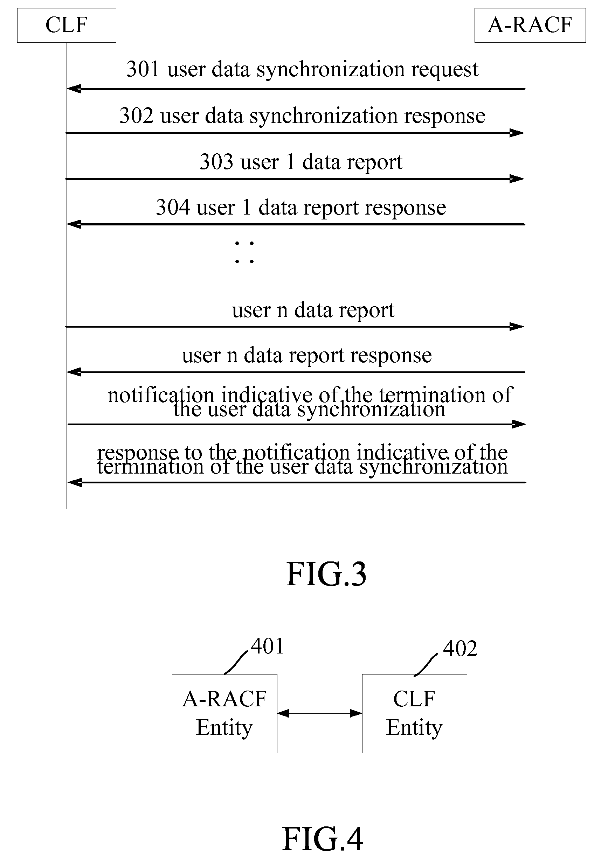

Based on the flowchart illustrated in Figure 2 and foregoing detailed analysis, Figure 3 is an exemplary flowchart of a method for synchronizing user data in the next generation network according to one embodiment of the present invention. As illustrated in Figure 3, the method includes the following steps.

Step 301: The A-RACF sends a user data synchronization request to the CLF.

Step 302: The CLF returns a user data synchronization response to the A-RACF.

Step 303: The CLF reports the user data of user 1 to the A-RACF.

Step 304: The A-RACF returns to the CLF a user data report response regarding user 1.

Then, in the steps hereinafter, the CLF reports to the A-RACF the user data of the rest users in succession and the A-RACF returns a user data report response of each user to the CLF. After completing the data report for synchronization, the CLF sends to the A-RACF a notification indicative of the termination of the user data synchronization. Then, the A-RACF returns a response to the notification indicative of the termination of the user data synchronization to the CLF.

In the foregoing embodiment, although the user data report response of each user succeeds to the user data report, however, in practice, such order may not be required to be complied with rigidly. The present invention is not intended to be limiting in this respect.

A system for synchronizing user data in the next generation network is also disclosed according to one embodiment of the present invention. Figure 4 is an exemplary diagram of a system for synchronizing user data in the NGN according to one embodiment of the present invention. As illustrated in Figure 4, the system includes an A-RACF entity 401 and a CLF entity 402.

The A-RACF entity 401 is configured to send a user data synchronization request to the CLF 402.

The CLF entity 402 is configured to send user data of each user to the A-RACF after receiving the user data synchronization request, so that the user data of the A-RACF entity 401 and the CLF entity 402 may keep synchronized.

In addition, the user data synchronization request may carry an A-RACF ID.

If the CLF entity 402 determines, based on the A-RACF ID in the user data synchronization request, that the A-RACF entity is valid after receiving the user data synchronization request, the CLF entity 402 is configured to send the user data of each user to the A-RACF entity related to the A-RACF ID. As such, the user data of the A-RACF entity related to the A-RACF ID and the user data of the CLF entity can keep synchronized.

Preferably, the CLF entity 402 is further configured to send to the A-RACF entity 401 a notification indicative of the termination of the user data synchronization after sending the user data of each user to the A-RACF entity 401.

The A-RACF entity 401 is further configured to return a response to the notification indicative of the termination of the user data synchronization to the CLF entity 402 after receiving the notification indicative of the termination of the user data synchronization.

Furthermore, if the CLF entity 402 determines to synchronize the user data with the A-RACF entity 401 based on the local policy rule after receiving the user data synchronization request, and CLF entity 402 is further configured to send the user data of each user to the A-RACF entity 401 and send a user data synchronization response to the A-RACF entity 401. The user data synchronization response carries information indicating the approval of the synchronization.

Moreover, if the CLF entity 402 determines to synchronize the user data with the A-RACF entity 401 based on the local policy rule after receiving the user data synchronization request, the CLF entity 402 may be further configured to determine, based on the local policy rule and/or user privacy information, a list of users to be synchronized with the A-RACF entity 401 and send the user data of the user in the list to the A-RACF entity 401. As such, the user data of the user in the list regarding the A-RACF and CLF can keep synchronized.

Preferably, the CLF entity 402 may determine if the user data is being updated by another entity after receiving the user data synchronization request. If the user data is being updated by another entity, the CLF the user data waits for the completion of the user data update and sends the updated user data of each user to the A-RACF entity 401; otherwise, the CLF sends the user data of each user to the A-RACF entity 401.

In this exemplary system, the user data may includes One or more of any combination of subscribed user ID, user physical access ID, user logical access ID, user access network type, user globally unique IP address, user initial gate settings, user subscription data, user QoS profile, user-based accounting rule, user-based policy information.

It is evident that the above enumerations of user data are exemplary only, which is not intended to be limiting to the scope of the present invention. Other types of user data information may be applicable to the present invention.

In conclusion, the present invention allows the A-RACF to synchronize user data with the CLF using an information flow for synchronizing user data after the A-RACF loses the user data. There is no need to further utilize an information flow for acquiring user data to acquire user data during user session establishment. Accordingly, the delay in establishing the user session can be reduced effectively, improving thereby the user experience. In addition, the A-RACF may also audit the user data by virtue of the information flow for synchronizing user data such that the invalid user data can be eliminated and the reliability of the A-RACF is improved.

An A-RACF is also disclosed according to one embodiment of the present invention.

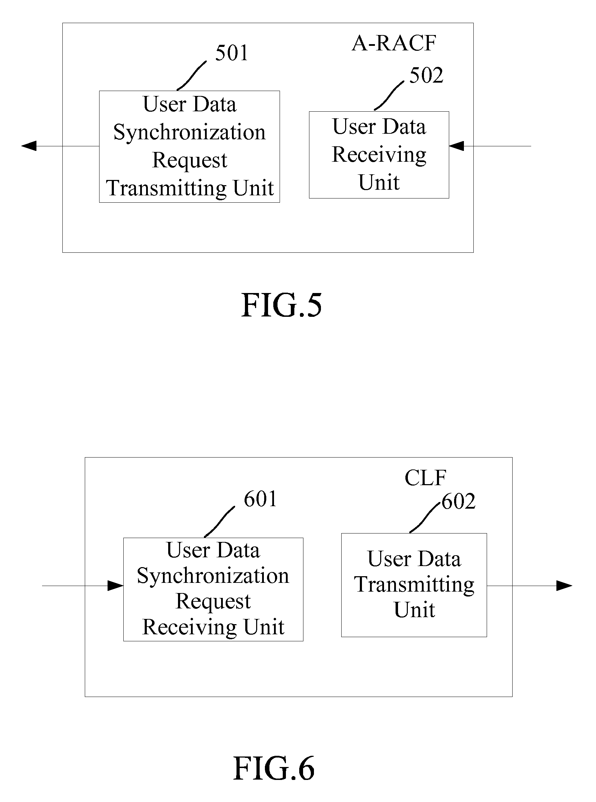

Figure 5 is an exemplary diagram of an A-RACF according to one embodiment of the present invention.

As illustrated in Figure 5, the A-RACF includes a user data synchronization request transmitting unit 501 and a user data receiving unit 502.

The user data synchronization request transmitting unit 501 is configured to generate a user data synchronization request and send the user data synchronization request to the CLF.

The user data receiving unit 502 is configured to receive the user data from the CLF in response to the user data synchronization request.

A CLF is also disclosed according to one embodiment of the present invention.

Figure 6 is an exemplary diagram of a CLF according to one embodiment of the present invention.

As illustrated in Figure 6, the CLF includes a user data synchronization request receiving unit 601 and a user data transmitting unit 602.

The user data synchronization request receiving unit 601 is configured to receive the user data synchronization request from the A-RACF.

The user data transmitting unit 602 is configured to return the user data to the A-RACF in response to the user data synchronization request.

Preferably, the user data synchronization request carries an A-RACF ID. The CLF further includes a determination unit. The determination unit is configured to determine the validity of the A-RACF based on the A-RACF ID included in the user data synchronization request. The user data transmitting unit is configured to return the user data to the A-RACF in response to the user data synchronization request when the determination unit determines that the A-RACF is valid.

The foregoing are merely exemplary embodiments of the present invention and is not intended to be limiting to the scope of the present invention. Any modifications, equivalents, improvements made within the spirit and principle of the present invention shall be construed as falling within the scope of the present invention.

## Claims

1. A method for synchronizing user data in a next generation network, **characterized in** comprising:
sending, by an Access Resource and Admission Control Function entity, A-RACF, a user data synchronization request to a Connectivity Session Location and Repository Function entity, CLF;
sending, by the CLF, user data to the A-RACF after receiving the user data synchronization request, so that the user data of the A-RACF and the CLF can keep synchronized.

2. The method of claim 1, **characterized in that,** the user data synchronization request carries an A-RACF ID; and
the method further comprises:
determining, by the CLF, the validity of the A-RACF based on the A-RACF ID carried in the user data synchronization request after receiving the user data synchronization request; and
sending the user data of each user to the A-RACF related to the A-RACF ID if the A-RACF is valid, so that the user data of the A-RACF related to the A-RACF ID and the user data of the CLF can keep synchronized.

3. The method of claim 1, **characterized in** further comprising:
sending, by the CLF, a notification indicative of the termination of the user data synchronization to the A-RACF after sending the user data of each user to the A-RACF.

4. The method of claim 3, **characterized in** further comprising:
returning, by the A-RACF, a response to the notification indicative of the termination of the user data synchronization to the CLF after receiving the notification indicative of the termination of the user data synchronization.

5. The method of claim 1, **characterized in that,** after the CLF receives the user data synchronization request,
the CLF further determines whether or not to synchronize user data with the A-RACF based on a local policy rule; if the CLF determines to synchronize the user data with the A-RACF, the CLF send the user data of each user to the A-RACF and sends to the A-RACF a user data synchronization response carrying information indicative of approving the synchronization; if the CLF determines not to synchronize the user data with the A-RACF, the CLF sends to the A-RACF a user data synchronization response carrying information indicative of denying synchronization.

6. The method of claim 5, **characterized in that,** after the CLF receives the user data synchronization request and determines to synchronize user data with the A-RACF based on the local rule,
the CLF figures out, based on the local policy rule and/or user privacy information, a list of users to be synchronized with the A-RACF and sends the user data of the user in the list to the A-RACF, so that the user data of the user in the list regarding the A-RACF and the CLF can keep synchronized.

7. The method of claim 1, **characterized in that,** after the CLF receives the user data synchronization request, the CLF determines if the user data is being updated; if the user data is being updated, the CLF waits for the completion of the user data update and sends to the A-RACF the updated user data of each user; otherwise, the CLF sends the user data of each user to the A-RACF.

8. The method of any one of claims 1-7, **characterized in that,** the user data comprises one or more of any combination of a subscribed user ID, a user physical access ID, a user logical access ID, a ser access network type, a user globally unique IP address, user initial gate settings, user subscription data, a user QoS profile, a user-based accounting rule, user-based policy information.

9. A system for synchronizing user data in a next generation network, **characterized in** comprising an Access Resource and Admission Control Function entity, A-RACF, and a Connectivity Session Location and Repository Function entity, CLF, wherein
the A-RACF entity is configured to send a user data synchronization request to the CLF entity; and
the CLF entity is configured to send user data of each user to the A-RACF after receiving the user data synchronization request, so that the user data of the A-RACF entity and the CLF entity can keep synchronized.

10. The system of claim 9, **characterized in that,** the user data synchronization request carries an A-RACF ID; and
if the CLF entity determines, based on the A-RACF ID in the user data synchronization request, that the A-RACF entity is valid after receiving the user data synchronization request, the CLF entity is configured to send the user data of each user to the A-RACF entity related to the A-RACF ID, so that the user data of the A-RACF entity related to the A-RACF ID and the user data of the CLF entity can keep synchronized.

11. The system of claim 9, **characterized in that,**
the CLF entity is further configured to send to the A-RACF entity a notification indicative of the termination of the user data synchronization after sending the user data of each user to the A-RACF entity.

12. The system of claim 11, **characterized in that,**
the A-RACF entity is further configured to return to the CLF entity a response to the notification indicative of the termination of the user data synchronization after receiving the notification indicative of the termination of the user data synchronization.

13. The system of claim 9, **characterized in that,**
if the CLF entity determines to synchronize the user data with the A-RACF entity based on the local policy rule after receiving the user data synchronization request, CLF entity is configured to send the user data of each user to the A-RACF entity and send a user data synchronization response to the A-RACF entity, wherein the user data synchronization response carries information indicative of approving the synchronization.

14. The system of claim 13, **characterized in that,**
if the CLF entity determines to synchronize the user data with the A-RACF entity based on the local policy rule after receiving the user data synchronization request,
the CLF entity is further configured to determine, based on the local policy rule and/or user privacy information, a list of users to be synchronized with the A-RACF entity and send the user data of the user in the list to the A-RACF entity, so that the user data of the user in the list regarding the A-RACF entity and CLF entity can keep synchronized.

15. The system of claim 9, **characterized in that,**
after the CLF receives the user data synchronization request, the CLF further determines if the user data is being updated; if the user data is being updated, the CLF the user data waits for the completion of the user data update and sends the updated user data of each user to the A-RACF; otherwise, the CLF sends the user data of each user to the A-RACF.

16. The system of any one of claims 9-15, **characterized in that,**
The user data comprises: one or more of any combination of a subscribed user ID, a user physical access ID, a user logical access ID, a user access network type, a user globally unique IP address, user initial gate settings, user subscription data, a user QoS profile, user-based accounting rule, user-based policy information.

17. An Access Resource and Admission Control Function entity, ARACF, **characterized in** comprising a user data synchronization request transmitting unit and a user data receiving unit, wherein
the user data synchronization request transmitting unit is configured to generate a user data synchronization request and send the user data synchronization request to a Connectivity Session Location and Repository Function entity, CLF; and
the user data receiving unit is configured to receive the user data from the CLF in response to the user data synchronization request.

18. A Connectivity Session Location and Repository Function entity, CLF, **characterized in** comprising a user data synchronization request receiving unit and a user data transmitting unit, wherein
the user data synchronization request receiving unit is configured to receive a user data synchronization request from an Access Resource and Admission Control Function entity, A-RACF; and
the user data transmitting unit is configured to return the user data to the A-RACF in response to the user data synchronization request.

19. The CLF of claim 18, **characterized in that,** the user data synchronization request carries an A-RACF ID, and the CLF further comprises a determination unit configured to determine the validity of an A-RACF based on the A-RACF ID carried in the user data synchronization request; and
the user data transmitting unit is configured to return the user data to the A-RACF in response to the user data synchronization request when the determination unit determines that the A-RACF is valid.
